# EUROPÄISCHE PATENTSCHRIFT

(11) **EP 4 244 519 B1**
(45) Veröffentlichungstag und Bekanntmachung des Hinweises auf die Patenterteilung: **28.08.2024**
(21) Anmeldenummer: 21806997.9
(22) Anmeldetag: 01.11.2021
(51) Int. Cl.: F16L 55/027, F01N 1/00, F01N 1/02, F16L 55/033

(54) **SCHALLMINDERER UND VERFAHREN ZU DESSEN HERSTELLUNG**
NOISE REDUCER AND METHOD FOR PRODUCING THE SAME
RÉDUCTEUR DE BRUIT ET SON PROCÉDÉ DE PRODUCTION

(30) Priorität: 16.11.2020 DE 102020130205
(43) Veröffentlichungstag der Anmeldung: 20.09.2023
(73) Patentinhaber: Umfotec Acoustic Solutions GmbH, 37154 Northeim (DE)
(72) Erfinder: BUCK, Ralf, 85110 Kipfenberg/Schelldorf (DE); LINKE, Berend, 37176 Nörten-Hardenberg (DE); HURLEBAUS, Viktor, 37154 Northeim (DE)
(74) Vertreter: Schneider, Peter Christian
(86) Internationale Anmeldenummer: PCT/EP2021/080248
(87) Internationale Veröffentlichungsnummer: WO 2022/101044

(56) Entgegenhaltungen:
- EP-A1- 0 395 540
- EP-A1- 3 042 064
- EP-A2- 0 056 604
- DE-A1- 102018 101 380
- JP-U- S6 117 411

## Beschreibung

### Gebiet der Erfindung

Die Erfindung betrifft einen Schallminderer, umfassend
- ein Gehäuse mit einem entlang einer Gehäuseachse längserstreckten, um die Gehäuseachse rotationssymmetrischen Mantel und zwei quer zur Gehäuseachse ausgerichteten Stirnwänden und
- ein das Gehäuse parallel versetzt zu der Gehäuseachse durchsetzendes Hauptrohr mit als Rohrwanddurchbrüche ausgebildeten Fenstern und
wobei das Hauptrohr in die Stirnwände durchsetzenden Durchlässen dichtend fixiert ist. Die Erfindung betrifft weiter ein Verfahren zur Herstellung eines Schallminderers.

### Stand der Technik

Gattungsgemäße Schallminderer sind bekannt aus der DE 10 2018 101 380 A1 oder EP 0395 540 A1.

Schallminderer sind für vielfältige Zwecke und basierend auf unterschiedlichen Wirkprinzipien allgemein bekannt. Der in der oben genannten Druckschrift offenbarte Schallminderer arbeitet, wie auch der erfindungsgemäße Schallminderer, im Wesentlichen nach dem Prinzip des sogenannten Helmholtz-Resonators. Ein mögliches Einsatzgebiet solcher Schallminderungs-Resonatoren liegt im Bereich der Abgasleitung von Kraftfahrzeugen sowie im Bereich von Kältemittelkreisen in Klimaanlagen. Das jeweilige Fluid, beispielsweise Abgas oder Kältemittel, strömt dabei durch ein Hauptrohr, welches ein Resonatorgehäuse durchsetzt. Die Durchlässe des Resonatorgehäuses sind dabei dichtend mit der Außenwand des Hauptrohres verbunden. Im Inneren des Resonatorgehäuses weist das Hauptrohr fensterartige Rohrwanddurchbrüche auf, über die sein Inneres mit dem Innenraum des Gehäuses fluidleitend verbunden ist. Form und Position der Fenster bestimmen gemeinsam mit der Größe der vom Gehäuse gebildeten Resonatorkammer diejenigen Frequenzen des vom Fluid geleiteten bzw. im Fluid entstehenden Schalls, die durch den Helmholtz-Effekt im Schallminderer reduziert werden. Zur Vergrößerung des Spektrums der reduzierbaren Frequenzen ist es aus der genannten Druckschrift bekannt, die Resonatorkammer in zwei Teilkammern zu unterteilen, indem eine Trennwand eingesetzt wird, die das Gehäuse in zwei unterschiedlich große Axialabschnitte unterteilt. Die Trennwand weist eine Durchgangsöffnung auf, mit der sie auf das Hauptrohr geschoben und an geeigneter Position dichtend mit dessen Außenwand verbunden ist. Mit ihrem äußeren Rand liegt die Trennwand an der Innenwand des Gehäuses an. Aus der genannten Druckschrift ist es bekannt, das Hauptrohr exzentrisch, parallel zur Symmetrieachse des rotationssymmetrischen Gehäusemantels verlaufen zu lassen. Diese asymmetrische Gestaltung erlaubt zusammen mit speziell platzierten Bohrungen in der Rohrwandung des Hauptrohres ein Absaugen von mit dem Fluid in die Resonatorkammer eingetragenen Öls. Das Gehäuse des bekannten Schallminderers weist eine streng zylindrische Form auf. Das Hauptrohr durchsetzt gerade, senkrechte Stirnwände, mit welchen es dichtend verbunden ist. Zur Abdichtung der Durchlässe wird in der Regel eine ringförmige Schweißnaht erforderlich sein.

Ein ähnlicher Schallminderer mit einem exzentrisch positionierten, senkrechte Stirnwände durchsetzenden Hauptrohr ist bekannt aus der FR 2 871 547 A1. Eine Besonderheit dieses Schallminderers liegt darin, dass - je nach Ausführungsform - entweder das Hauptrohr oder der Mantel abweichend von einer rein zylindrischen Geometrie konisch gestaltet ist.

Die bekannten Schallminderer sind in mehrfacher Hinsicht nicht optimal. Einerseits muss zur Schaffung hinreichender Druckfestigkeit eine nicht unerhebliche Materialstärke des Gehäuses vorgesehen werden, was mit nachteilig hohen Kosten und hohem Gewicht verbunden ist. Zudem bedeutet die Verschweißung des Hauptrohres mit den Durchlässen in den Stirnwänden des Gehäuses einen zweitaufwändigen Arbeitsschritt.

Aus der US 3,141,519 A ist ein Schallminderer bekannt, der eine druckkesselartige Grundform aufweist, bestehend aus einem zylindrischen Mantel und konvex gewölbten Stirnseiten. Sein hohler Innenraum ist mittels mehrerer axial voneinander beabstandeter und senkrecht zur Axialrichtung stehender Zwischenwände unterteilt. Die Zwischenwände weisen mittige, zum Mantel konzentrische Durchbrüche auf, die von einem gemeinsamen Axialstab durchsetzt sind, auf welchem Verschlusselemente fixiert sind, mittels deren die Durchbrücke in den Zwischenwänden - je nach Axiallage des Axialstabs - graduell verschließbar sind. Einseitig durchragt der Axialstab eine der Seitenwände mittig, um dort mit einer von außen zugänglichen Axialstelleinrichtung wechselwirken zu können, mittels derer die Axiallage des Axialstabes und damit die Wirkung des Schallminderers einstellbar ist. Die Luftzu- und -ableitung erfolgt über außermittig aus den Stirnwänden ausgeformte, achsparallele Rohrstutzen. Deren Übergangsbereich bildet insbesondere in seinem - bezogen auf die Stirnseiten - radial inneren Teilbereich einen spitzen Winkel zur konvexen Grundkrümmung der jeweiligen Stirnseite.

Aus der DE 10 2005 005 865 A1 ist ein Schallminderer bekannt, dessen Resonatorgehäuse, ebenso wie sein Hauptrohr, aus zwei axial zusammengesetzten Teilstücken gebildet ist. An ihrer Kontaktstelle gehen die Hauptrohr-Teilstücke in eine nach radial außen erstreckte Ringwand über, die bei der Montage zwischen den einander zugewandten Rändern der Gehäuse-Teilstücke fixiert wird. Auf diese Weise kann das Hauptrohr relativ zum Gehäuse fixiert werden, ohne dabei die Stirnwände, zu denen es auch im Montageendzustand beabstandet bleibt, zu kontaktieren. Die senkrechten Stirnwände des Gehäuses weisen zentrale, Anschlussstutzen auf, in denen externe Anschlussrohre fixiert werden können.

### Aufgabenstellung

Es ist die Aufgabe der vorliegenden Erfindung, einen gattungsgemäßen Schallminderer gewichtsmäßig leichter und kostengünstiger herstellbar zu machen.

### Darlegung der Erfindung

Diese Aufgabe wird durch einen Schallminderer mit den Merkmalen des Anspruchs 1 und ein Verfahren zur Herstellung eines Schallminderers mit den Verfahrensschritten des Anspruchs 12 gelöst.

Bevorzugte Ausführungsformen der Erfindung sind Gegenstand der abhängigen Patentansprüche.

Zunächst nimmt die Erfindung Abstand von der streng zylindrischen Gestaltung des Gehäuses. Anstelle der senkrechten Stirnwände eines Zylinders werden beim erfindungsgemäßen Schallminderer nach außen gewölbte Stirnwände eingesetzt. Die Formgebung des Gehäuses insgesamt wird damit an einen Druckkessel angelehnt. Entsprechend erhöht sich die strukturelle Innendruckfestigkeit des Gehäuses, was die Wahl einer dünneren Wandstärke im Vergleich zu streng zylindrischen Gehäusen gleicher Gesamt-Druckfestigkeit erlaubt. Dies führt zu geringerem Materialeinsatz und somit zu geringeren Kosten und geringerem Gewicht.

Allerdings kann die Form des Gehäuses nicht vollständig derjenigen eines Druckkessels angeglichen werden. Schließlich bedarf es ja der exzentrischen Durchführung des Hauptrohres durch besagte Stirnwände, wobei der Hauptrohrdurchmesser keineswegs klein gegenüber dem Stirnwanddurchmesser ist. Problematisch ist dabei insbesondere die exzentrische Anordnung der Durchlässe, die sich zwischen der Stirnwandmitte und (mit geringem Abstand) dem Stirnwandrand befinden. Grundsätzlich denkbar wäre das Vorsehen eines ovalen Fensters in der gewölbten Stirnwand, durch welche das runde Hauptrohr formschlüssig hindurchgeführt und mit deren Rand seine Außenseite verschweißt würde. Hierdurch würde sich jedoch einerseits das Herstellungsverfahren nicht vereinfachen, sondern aufgrund der schwierigeren Bohr- und Schweißbedingungen eher verkomplizieren. Andererseits entstünden im Bereich des spitzwinkligen Aufeinanderstoßens von Stirnwand und Hauptrohr druckempfindliche Bereiche, die entweder durch erhöhte Materialstärke oder besonders dicke Schweißnähte kompensiert werden müssten, was die eingangs erläuterte erfindungsgemäße Materialeinsparung wenigstens teilweise zunichtemachen würde.

Es ist daher ein weiterer Aspekt der Erfindung, die Durchlässe des Rohrstutzen aus dem Material der Stirnwände auszuformen, wobei der Übergangsbereich zwischen Stirnwand und Rohrstutzen mit vergleichsweise großen Radien versehen ist, sodass sich keine rissbildungsanfälligen, spitzen Winkel ergeben. Die Rohrstutzen ragen axial nach außen, sodass die Wölbung des Übergangsbereichs der Grundwölbung der Stirnwände entgegengesetzt ist und deren Symmetrie im Bereich der Durchlässe bricht. Aufgrund der Vermeidung spitzer Winkel kann dadurch aber das Konzept der dünnen Materialstärken konsequent durchgehalten werden. Zudem bieten die Rohrstutzen mit ihren Innenwandungen einen großflächigen Kontaktbereich zur Außenwandung des Hauptrohres, sodass es möglich wird, letzteres rein kraftschlüssig mit den Rohrstutzen zu verbinden, es insbesondere klemmend in die Rohrstutzen einzupressen, um so eine mechanische Fixierung und zugleich eine Abdichtung des Gehäuse- bzw. Resonatorinnenraums zu erzielen. Das bisherige Verschweißen des Hauptrohres mit dem Gehäuse kann somit entfallen, sodass der erfindungsgemäße Schallminderer nicht nur gewichtsmäßig leichter sondern auch kostengünstiger herstellbar ist als Schallminderer nach dem Stand der Technik.

Der Radius der konkaven Krümmung des Übergangsbereichs (zwischen Rohrstutzen und Stirnwand) beträgt mindestens 1/15 des Radius der konvexen Krümmung der Grundwölbung der Stirnwände. Aufgrund der exzentrischen Position der Rohrstutzen in den grundsätzlich rotationssymmetrisch ausgebildeten Stirnwänden ändert sich der Winkel zwischen der zum Hauptrohr konzentrischen Wandung des Rohrstutzens einerseits und der Tangente an die Stirnwand andererseits über den Umfang des Durchlasses. Der spitzteste Winkel liegt an der dem Mittelpunkt der Stirnwand nächstliegenden Punkt des Durchlassumfangs. Hier befindet sich also bei der erfindungsgemäßen Ausgestaltung derjenige Abschnitt des Übergangsbereichs mit dem kleinsten Radius. An dieser Stelle soll er gemäß der bevorzugten Ausführungsform wenigstens den genannten Wert relativ zur Grundwölbung der Stirnwand haben. Diese Relation stellt einen optimalen Kompromiss zwischen Druckfestigkeit und Wandstärke dar. Deutlich kleinere Radien führen zu rissbildungsanfälligen Stellen; deutliche größere Radien würden einen vermehrten Materialeinsatz, insbesondere größere Wandstärken bedingen.

Bevorzugt ist das Hauptrohr klemmend in den Rohrstutzen fixiert. Damit wird die durch die oben erläuterte, erfindungsgemäße Gestaltung geschaffene Möglichkeit der Vereinfachung des Herstellungsverfahrens auch tatsächlich umgesetzt. Allerdings ist im Rahmen der Erfindung auch nicht ausgeschlossen, dass von dieser Möglichkeit kein oder nur bedingter Gebrauch gemacht wird und das Hauptrohr mit dem Rohrstutzen verschweißt, insbesondere zusätzlich zu der klemmenden Fixierung verschweißt ist.

Der Fachmann wird erkennen, dass der erfindungsgemäße Schallminderer in seiner Montageendstellung, beispielsweise im Abgassystem eines Kraftfahrzeugs oder im Kältemittelkreis einer Klimaanlage, an weitere Fluidleitungen angeschlossen ist. Dieser Anschluss erfolgt insbesondere über die nach axial außen ragenden Rohrstutzen. Günstigerweise stehen diese Rohrstutzen nach axial außen über die von innen in sie hineinragenden Enden des Hauptrohres über. Dies ermöglicht es, Fluidanschlussanleitungen vom selben Kaliber wie das Hauptrohr in die Rohrstutzen einzuschieben und dort insbesondere klemmend, ggf. jedoch auch mit einer (eventuell zusätzlichen) Verschweißung, zu fixieren. Das Fluid erfährt bei dieser Ausgestaltung bei seinem Übergang von der Fluidanschlussleitung zum Hauptrohr keine Störung durch Änderungen des Innendurchmessers seiner Leitung.

Bevorzugt ist in dem Gehäuse wenigstens eine von dem Hauptrohr durchsetzte, senkrecht zur Gehäuseachse ausgerichtete, das Gehäuseinnere in unterschiedlich große Axialabschnitte unterteilende Trennwand angeordnet. Diese ist bzw. sind bevorzugt dichtend mit der Außenseite des Hauptrohres und der Innenseite des Mantels verbunden. Es sind jedoch auch Varianten "dichtloser" Trennwände denkbar, bei denen die Trennwand zum Hauptrohr und/oder zum Mantel keine dichtende Verbindung aufweist. Die Trennwand kann in einem solchen Fall z.B. als ein das Hauptrohr außen oder den Mantel innen umlaufender Steg ausgebildet sein. Auch das Vorsehen von einer oder mehreren dichtenden sowie einer oder mehrerer Dichtlos-Trennwänden in ein und demselben Schallminderer ist möglich und kann in besonderen Anwendungsfällen sinnvoll sein. Wie eingangs erläutert kann die Unterteilung des Gehäuseinnenraums in mehrere voneinander getrennte (dichtende Trennwand) oder fluidleitend miteinander verbundene (Dichtlos-Trennwand) Resonatorkammern zur Verbreiterung des Schallminderungs-Spektrums genutzt werden.

Zur Fixierung der Trennwand auf dem Hauptrohr ist bevorzugt vorgesehen, dass diese kraftschlüssig mit dem Hauptrohr verbunden, insbesondere mit einer exzentrisch angeordneten Durchgangsöffnung auf dieses aufgepresst ist. Allerdings ist es auch möglich, zusätzlich eine formschlüssige Axialfixierung zu realisieren. Hierzu ist bei einer Weiterbildung der Erfindung vorgesehen, dass das Hauptrohr wenigstens einseitig axial anliegend an der Trennwand einen diese auf ihm zusätzlich formschlüssig axial fixierenden, radialen Vorsprung aufweist. Der Vorsprung kann ein einzelner Buckel, ein umlaufender Ring oder eine Mehrzahl ringförmig über den Außenumfang des Hauptrohres verteilter Buckel sein. Zur verfahrenstechnischen Realisierung wird günstigerweise zunächst die Trennwand auf das Hauptrohr aufgepresst. Im Anschluss wird dieses dann mit dem axial an der Trennwand anliegenden, radialen Vorsprung versehen. Dies kann beispielsweise durch eine Vercrimpung oder Stauchung des Rohres erfolgen. Denkbar ist, dass hierdurch eine bidirektional wirksame, formschlüssige Axialfixierung der Trennwand bewirkt wird, d. h. der oder die Vorsprünge werden nach dem Aufpressen beiderseits der Trennwand erzeugt. Alternativ ist denkbar, das Hauptrohr bereits vor dem Aufpressen der Trennwand mit einem Vorsprung bzw. einem Satz von Vorsprüngen zu versehen, die als Anschlag für den Aufpressvorgang dienen, um ggf. anschließend auf der anderen Seite der Trennwand einen oder mehrere zusätzliche Vorsprünge zu erzeugen. Nochmals alternativ ist auch eine nur undirektional wirksame, formschlüssige Axialfixierung mittels möglich.

Wie erwähnt, liegt der Außenrand der Trennwand bei bestimmten Ausführungsformen an der Innenseite des Gehäusemantels - insbesondere dichtend, ggf. aber auch dichtlos - an, um den Gehäuseinnenraum in zwei getrennte Resonatorkammern zu unterteilen. Zur Abdichtung kann der Rand der Trennwand mit entsprechenden Dichtelementen versehen sein. Denkbar ist jedoch auch eine kraftschlüssige Anlage des Trennwandrandes an der Gehäuseinnenwand. Insbesondere die letztgenannte Variante wird unterstützt durch eine bevorzugte Formgebung des Gehäuses, dessen Mantel sich bevorzugt zu seinen axialen Enden hin konisch verjüngt. Bei dieser Ausführungsform ist es nämlich möglich, durch Variation der Axialposition der Trennwand relativ zum Hauptrohr bzw. gemeinsam mit dem Hauptrohr relativ zum Gehäuse die Anlagekraft, mit der der Trennwandrand am konischen Bereich des Gehäuses anliegt, zu beeinflussen. Insbesondere kann die Trennwand so stark gegen die sich verjüngende Schräge des konischen Bereichs geschoben werden, dass ihr Rand sicher dichtend kraftschlüssig anliegt.

Als besonders vorteilhaft hat es sich erwiesen, wenn das Gehäuse aus zwei vorzugsweise formidentischen Halbschalen zusammengesetzt ist, die entlang ihrer Schalenränder dicht miteinander verbunden, insbesondere verschweißt sind. Solche Halbschalen können, wie bevorzugt vorgesehen, Produkte eines Tiefziehprozesses sein. Bevorzugte Materialien für die Halbschalen und/oder das Hauptrohr und/oder die Trennwand sind Metall, in besonderen Anwendungsfällen aber auch Kunststoff.

Der besondere Vorteil des Aufbaus des Gehäuses aus zwei Halbschalen liegt in dem dadurch möglichen Herstellungsverfahren, welches besonders wenig arbeitsintensiv ist. Ein solches Verfahren umfasst die Schritte:
- Bereitstellen der beiden Halbschalen,
- Bereitstellen des Hauptrohres mit der von ihm durchsetzten, mit der Außenseite seiner Rohrwand dichtend verbundenen, senkrecht zur Rohrachse ausgerichteten Trennwand,
- klemmendes Einführen der Enden des Hauptrohres in den Rohrstutzen je einer der Halbschalen, sodass deren Schalenränder zur Anlage aneinander kommen und der äußere Rand der Trennwand an der Innenwand einer der Halbschalen anliegt,
- dichtendes Verbinden der Schalenränder miteinander.

Im Fall eines sich nach außen konisch verjüngenden Gehäusemantels kann dabei dasjenige Ende des Hauptrohres, welches der Trennwand näher benachbart ist, so weit in den Rohrstutzen der ihn zugeordneten Halbschale eingeführt werden, dass der äußere Rand der Trennwand an der Innenwand des konischen Bereichs dieser Halbschale anliegt - und zwar vorzugsweise dichtend und kraftschlüssig. Alternativ oder zusätzlich kann ein Formschluss vorgesehen sein, der dadurch bewirkt wird, dass die Innenwand der Halbschale im Anlagebereich einen hinterschneidungsfreien Anschlag aufweist. Dieser Anschlag kann insbesondere durch eine ringförmige, den gesamten Umfang der Halbschale innen umlaufenden Sockel gebildet sein. Die Hinterschneidungsfreiheit dieses Sockels ist hilfreich, um, wie bevorzugt vorgesehen, die Halbschale im Rahmen eines Tiefziehprozesses herstellen zu können.

Weitere Einzelheiten und Vorteile der Erfindung ergeben sich aus der nachfolgenden speziellen Beschreibung und den Zeichnungen.

### Kurzbeschreibung der Zeichnungen

Es zeigen:
- Figur 1:: eine perspektivische Darstellung eines erfindungsgemäßen Schallminderers,
- Figur 2:: einen Längsschnitt durch den Schallminderer von Figur 1 sowie
- Figur 3:: sieben Querschnitte durch den Schallminderer von Figur 1 gemäß den Schnittebenen III a bis III g in Figur 2.

### Beschreibung bevorzugter Ausführungsformen

Gleiche Bezugszeichen in den Figuren deuten auf gleiche oder analoge Elemente hin.

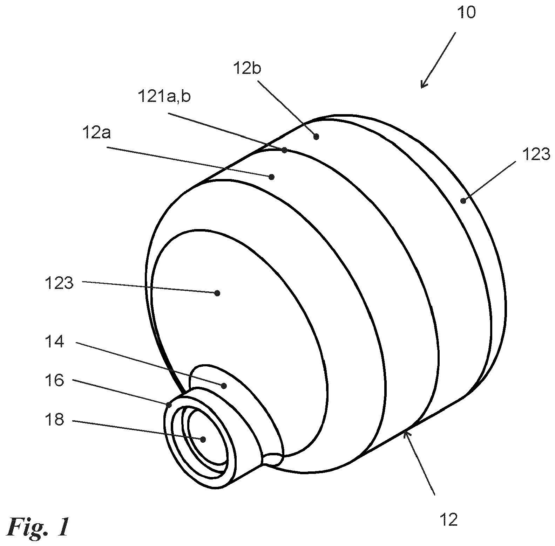

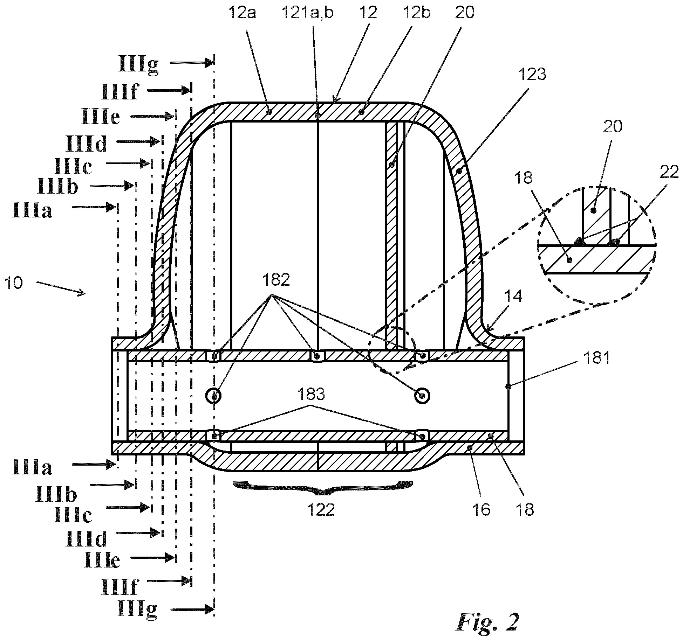

Figur 1 zeigt eine perspektivische Darstellung eines erfindungsgemäßen Schallminderers 10, dessen Aufbau anhand des Längsschnittes von Figur 2, der den Schallminderer 10 in seiner ungefähren Einbauendausrichtung zeigt, deutlicher erläutert werden kann. Der Schallminderer 10 umfasst ein Gehäuse 12, welches aus zwei im vorliegenden Ausführungsbeispiel formidentischen Halbschalen 12a, 12b aufgebaut ist. Die Halbschalen 12a, 12b liegen mit ihren kreisrunden Schalenrändern 121a, b aneinander an und sind entlang dieser Naht miteinander verschweißt. Die Halbschalen 12a, 12b sind derart geformt, dass das Gehäuse 12 axial mittig einen rotationssymmetrischen Mantel 122 aufweist. Bei der Ausführungsform von Figur 2 ist der Mantel 122 exakt zylindrisch geformt. Seitlich an den Mantel 122 schließen sich Stirnseiten 123 an, die eine konvexe, d.h. zum Gehäuseäußeren hin gebogene Grundwölbung aufweisen. Auch diese Grundwölbung ist rotationssymmetrischer Natur.

Allerdings wird die Rotationssymmetrie der Stirnwände 123 in einem außermittig (unten in den Figuren) gelegenen Bereich dadurch gebrochen, dass die Stirnwände 123 über einen konkav gewölbten Übergangsbereich 14 in Rohrstutzen 16 übergehen, die zueinander koaxiale und zur Symmetrieachse des Mantels 122 parallel versetzte Durchlässe durch die Stirnwände 123 bilden.

Das Gehäuse 12 ist von einem Hauptrohr 18 durchsetzt, welches mit seinen Enden 181 in jeweils einem der Rohrstutzen 16 kraftschlüssig, insbesondere klemmend, fixiert ist. Der Kraftschluss wirkt vollumfänglich um den Umfang des Hauptrohres 18, sodass dadurch die von den Rohrstutzen 16 gebildeten Durchlässe in das Gehäuseinnere abgedichtet sind. Bei der gezeigten Ausführungsform stehen die Rohrstutzen 16 nach axial außen über die Enden 181 des Hauptrohres 18 über. In diesem Bereich lassen sich im Umfang an das Hauptrohr 18 angepasste Zuleitungen klemmend und/oder durch Stoffschluss (z.B. Verschweißung oder Verklebung) fixieren.

Die Wandung des Hauptrohres 18 umfasst mehrere Durchbrüche, die sein Inneres mit dem Gehäuseinneren fluidleitend verbinden. Die Durchbrüche haben dabei unterschiedliche Funktionen. Die in Figur 2 oben sowie seitlich angeordneten Fenster 182 erlauben den Eintritt von Schallwellen aus dem Hauptrohr 18 in das als Resonatorkammer wirkende Gehäuseinnere. Die in Figur 2 unten angeordneten Bohrungen 183 dienen hingegen der Absaugung von Flüssigkeit, die sich im unteren Bereich der Resonatorkammer ansammeln kann und die aufgrund des Strahlpumpen-Effektes des das Hauptrohr 18 durchströmenden Fluids abgesaugt wird.

Bei der dargestellten Ausführungsform ist das Gehäuseinnere durch einen Trennwand 20 in zwei voneinander getrennte Resonatorkammern unterteilt. Die Trennwand 20 liegt einerseits dichtend am Hauptrohr 18, von welchem sie durchsetzt ist, und andererseits an der Innenwand des Mantels 122 an. Beide dichtenden Anlagen erfolgen vorzugsweise kraftschlüssig. Allerdings ist alternativ oder vorzugsweise zusätzlich ein Formschluss möglich. Bei der dargestellten Ausführungsform ist dies im Bereich der Anlage der Trennwand 20 am Hauptrohr 18 realisiert, wie durch das Vergrößerungsfenster in Figur 2 angedeutet. Hier weist das Hauptrohr seitlich und anliegend an der Trennwand 20 radiale Vorsprünge 22 auf, mittels welcher die Axialposition der Trennwand 20 (zusätzlich) gesichert ist.

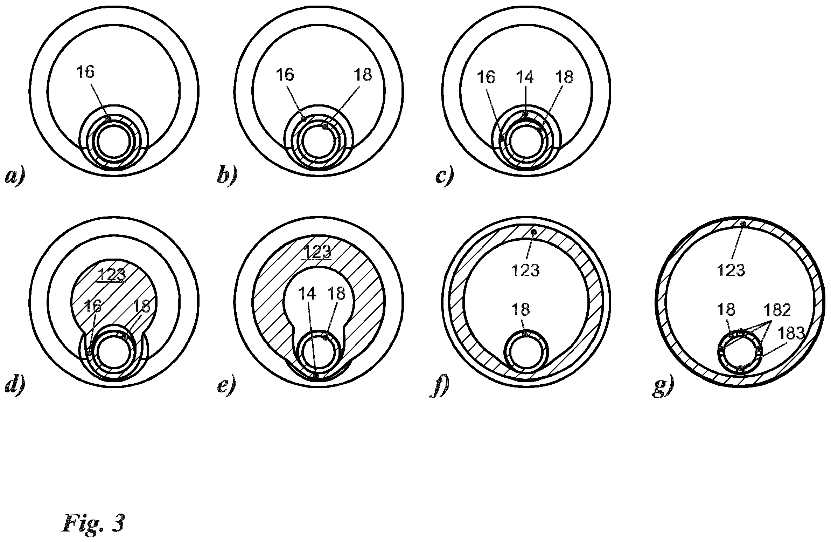

Figur 3 zeigt anhand von sieben Querschnitten durch den Schallminderer der Figuren 1 und 2 entlang der Schnittlinien III a bis III g in Figur 2 Details des konkaven Übergangsbereichs zwischen Rohrstutzen 16 und Stirnwand 123. Man erkennt die vollkommen hinterschneidungsfreie Formgebung der Halbschalen 12a, 12b, was es ermöglicht, diese Bauteile als Tiefziehelemente zu fertigen.

Im Rahmen des bevorzugten Herstellungsverfahrens wird zunächst die Trennwand 20 auf das Hauptrohr 18 aufgepresst. Hierzu kann ein bereits zuvor auf dem Hauptrohr 18 aufgebrachter Radialvorsprung 22 als Anschlag für den Aufpressprozess dienen. Allerdings ist es auch möglich, die Trennwand 20 ohne einen solchen Radialvorsprung präzise axial zu positionieren. Sodann kann auf der anderen Seite der aufgepressten Trennwand ein (weiterer) Radialvorsprung 22, beispielweise durch Vercrimpung oder Stauchung des Hauptrohres 18 erzeugt werden, um die aufgepresste Trennwand zusätzlich formschlüssig axial zu fixieren. Auch dieser (weitere Vorsprung ist bei entsprechend gestaltetem Aufpressverfahren verzichtbar). Sodann wird das Zusammenbauteil aus Hauptrohr 18 und Trennwand 20 in eine der Halbschalen 12a, 12b eingeschoben, wobei das vordere Ende des Hauptrohres 18 von innen (d.h. vom späteren Gehäuseinneren her) in den korrespondierenden Rohrstutzen 16 eingeschoben und mit diesem verpresst wird. Bei der Konstellation von Figur 2 wird das Zusammenbauteil aus Hauptrohr 18 und Trennwand 20 bevorzugt in die in Figur 2 rechte Halbschale 12b eingeschoben. Dabei kommt auch der Außenrand der entsprechend dimensionierten Trennwand 20 zur dichtenden, kraftschlüssigen Anlage an der Innenwand des Mantels 122. Dieser kann (in Figur 2 nicht gezeigt) hier mit einem Anschlag versehen sein, der die dichtende Anlage unterstützt. Allerdings sollte ein solcher Anschlag im Hinblick auf den Herstellungsprozess der Halbschalen vorzugsweise hinterschneidungsfrei gestaltet sein. In einem nachfolgenden Schritt wird die zweite Halbschale in analoger Weise auf das freie, hintere Ende des Hauptrohres 18 aufgeschoben, bis die Schalenränder 121a, b aneinander anliegen und miteinander verschweißt werden können.

Zum Anschluss des Schallminderers 10 in ein Fluidleitungssystem, beispielsweise in die Abgasleitung eines Kraftfahrzeugs oder die Kältemittelleitung einer Klimaanlage, können systemseitige Anschlussrohre in die überstehenden Bereiche der Rohrstutzen eingeschoben und dort kraft- und/oder stoffschlüssig fixiert werden. Innen- und Außendurchmesser der Anschlussrohre entsprechen dabei vorzugsweise Innen- und Außendurchmesser des Hauptrohres 18, sodass sich dem strömenden Fluid ein konstanter Kanaldurchmesser bietet.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum von Variationsmöglichkeiten an die Hand gegeben. Insbesondere ist es nicht zwingend, den Mantel 122, wie gezeigt, zylindrisch zu gestalten. Insbesondere im Hinblick auf eine dichtende Anlage der Trennwand 20 an der Mantelinnenwand kann es günstig sein, eine sich nach axial außen konisch verjüngende Mantelform zu wählen. Eine solche Gestaltung vereinfacht auch die Ausbildung hinterschneidungsfreier Anschläge für die Anlage der Trennwand 20 an der Innenseite des Mantels 122.

### Bezugszeichenliste

- 10: Schallminderer
- 12: Gehäuse
- 12a, b: Halbschalen
- 121a, b: Schalenränder
- 122: Mantel
- 123: Stirnwand
- 14: Übergangsbereich
- 16: Rohrstutzen
- 18: Hauptrohr
- 181: Ende von 18
- 182: Fenster
- 183: Bohrung
- 20: Trennwand
- 22: Radialvorsprung

## Patentansprüche

1. Schallminderer (10), umfassend
- ein Gehäuse (12) mit einem entlang einer Gehäuseachse längserstreckten, um die Gehäuseachse rotationssymmetrischen Mantel (122) und zwei quer zur Gehäuseachse ausgerichteten Stirnwänden (123), die eine konvexe, zur Gehäuseachse rotationssymmetrische Grundwölbung aufweisen, und
- ein das Gehäuse (12) parallel versetzt zu der Gehäuseachse durchsetzendes Hauptrohr (18) mit als Rohrwanddurchbrüche ausgebildeten Fenstern (182),
wobei das Hauptrohr (20) in die Stirnwände (123) durchsetzenden Durchlässen dichtend fixiert ist,
die Stirnwände (123) im Bereich der Durchlässe in nach außen weisende Rohrstutzen (16) übergehen, die einstückig und materialeinheitlich aus der jeweiligen Stirnwand (123) vorspringen
und der jeweilige ringförmige Übergangsbereich (14) zwischen Stirnwand (123) und Rohrstutzen (16) in Abweichung von der konvexen Grundwölbung konkav gekrümmt ist,
**dadurch gekennzeichnet,**
**dass** die Rohrstutzen ausschließlich nach außen weisen und der Radius der konkaven Krümmung mindestens 1/15 des Radius der konvexen Krümmung der Grundwölbung beträgt.

2. Schallminderer (10) nach Anspruch 1,
**dadurch gekennzeichnet,**
**dass** sich die Durchlässe jeweils zwischen Mitte und Rand der zugeordneten Stirnwand (123) befinden, und jeweils mit geringem Abstand zum Stirnwandrand.

3. Schallminderer (10) nach einem der vorangehenden Ansprüche,
**dadurch gekennzeichnet,**
**dass** das Hauptrohr (18) klemmend in den Rohrstutzen (16) fixiert, insbesondere mit dem Rohrstutzen (16) verschweißt ist.

4. Schallminderer (10) nach einem der vorangehenden Ansprüche,
**dadurch gekennzeichnet,**
**dass** die Rohrstutzen (16) nach axial außen über die in sie hineinragenden Enden (181) des Hauptrohres (18) überstehen.

5. Schallminderer (10) nach einem der vorangehenden Ansprüche,
**dadurch gekennzeichnet,**
**dass** in dem Gehäuse (12) wenigstens eine von dem Hauptrohr (18) durchsetzte, senkrecht zur Gehäuseachse ausgerichtete, das Gehäuseinnere in unterschiedlich große Axialabschnitte unterteilende Trennwand (20) angeordnet ist.

6. Schallminderer (10) nach Anspruch 5,
**dadurch gekennzeichnet,**
**dass** die Trennwand mit der Außenseite des Hauptrohres (18) und/oder der Innenseite des Mantels (122) dichtend verbunden ist.

7. Schallminderer (10) nach Anspruch 6,
**dadurch gekennzeichnet,**
**dass** die Trennwand (20) kraftschlüssig mit dem Hauptrohr (18) verbunden, insbesondere mit einer exzentrisch angeordneten Durchgangsöffnung auf dieses aufgepresst ist.

8. Schallminderer (10) nach Anspruch 7,
**dadurch gekennzeichnet,**
**dass** das Hauptrohr (18) wenigstens einseitig axial anliegend an der Trennwand (20) einen diese auf ihm zusätzlich formschlüssig axialfixierenden, radialen Vorsprung (22) aufweist.

9. Schallminderer (10) nach einem der vorangehenden Ansprüche,
**dadurch gekennzeichnet,**
**dass** der Mantel sich zu seinen axialen Enden hin konisch verjüngt.

10. Schallminderer (10) nach einem der vorangehenden Ansprüche,
**dadurch gekennzeichnet,**
**dass** das Gehäuse (12) aus zwei Halbschalen (12a, 12b) zusammengesetzt ist, die entlang ihrer Schalenränder (121a, 121b) dicht miteinander verbunden, insbesondere verschweißt sind.

11. Schallminderer (10) nach Anspruch 10,
**dadurch gekennzeichnet,**
**dass** die Halbschalen (12a, 12b) Produkte eines Tiefziehprozesses sind.

12. Verfahren zur Herstellung eines Schallminderers (10) nach einem der Ansprüche 10 bis 11, umfassend die Schritte:
- Bereitstellen der beiden Halbschalen (12a, 12b),
- Bereitstellen des Hauptrohres (18) mit der von ihm durchsetzten, mit der Außenseite seiner Rohrwand dichtend verbundenen, senkrecht zur Rohrachse ausgerichteten Trennwand (20),
- klemmendes Einführen der Enden (181) des Hauptrohres (18) in den Rohrstutzen (16) je einer der Halbschalen (12a, 12b), sodass deren Schalenränder (121a, 121b) zur Anlage aneinander kommen und der äußere Rand der Trennwand (20) an der Innenwand einer der Halbschalen (12b) anliegt,
- dichtendes Verbinden der Schalenränder (121a, 121b) miteinander.

13. Verfahren nach Anspruch 12, soweit rückbezogen auf Anspruch 9,
**dadurch gekennzeichnet,**
**dass** dasjenige Ende des Hauptrohres, welches der Trennwand näher benachbart ist, so weit in den Rohrstutzen der ihm zugeordneten Halbschale eingeführt wird,
**dass** der äußere Rand der Trennwand an der Innenwand des konischen Bereichs dieser Halbschale anliegt.

14. Verfahren nach Anspruch 13,
**dadurch gekennzeichnet,**
**dass** die Innenwand der Halbschale im Anlagebereich der Trennwand an der Innenwand der Halbschale einen hinterschneidungsfreien Anschlag aufweist.

15. Verfahren nach einem der Ansprüche 12 bis 14,
**dadurch gekennzeichnet,**
**dass** die Trennwand (20) zunächst auf das Hauptrohr (18) aufgepresst wird, welches sodann mit wenigstens einem axial an der Trennwand (20) anliegenden, radialen Vorsprung (22) versehen wird.

## Claims

1. A sound reducer (10), comprising
- a housing (12) having a casing (122) which extends longitudinally along a housing axis and is rotationally symmetrical about the housing axis, and two end walls (123) which are orientated transversely to the housing axis and have a convex base curvature which is rotationally symmetrical with respect to the housing axis, and
- a main tube (18) passing through the housing (12) parallel offset to the housing axis with windows (182) formed as tube wall openings,
wherein the main pipe (20) is fixed in a sealing manner in passages passing through the end walls (123),
the end walls (123) merging in the region of the passages into outwardly pointing pipe sockets (16) which project from the respective end wall (123) in one piece and in the same material,
and the respective annular transition region (14) between the end wall (123) and the pipe socket (16) being concavely curved in deviation from the convex basic curvature,
**characterised in that**
the pipe sockets point exclusively outwards and the radius of the concave curvature is at least 1/15 of the radius of the convex curvature of the base curvature.

2. The sound reducer (10) according to claim 1,
**characterised in that**
the passages are each located between the center and the edge of the associated end wall (123) and in each case at a small distance from the edge of the end wall.

3. The sound reducer (10) according to one of the preceding claims,
**characterised in that**
the main pipe (18) is fixed in the pipe socket (16) in a clamping manner, in particular is welded to the pipe socket (16).

4. The sound reducer (10) according to one of the preceding claims, **characterised in that**
the pipe sockets (16) project axially outwards beyond the ends (181) of the main pipe (18) projecting into them.

5. The sound reducer (10) according to one of the preceding claims, **characterised in that**
at least one partition wall (20) is arranged in the housing (12), through which the main tube (18) passes and which is aligned perpendicular to the housing axis and divides the housing interior into axial sections of different sizes.

6. The sound reducer (10) according to claim 5,
**characterised in**
**that** the partition wall is sealingly connected to the outside of the main pipe (18) and/or the inside of the casing (122).

7. The sound reducer (10) according to claim 6,
**characterised in**
**that** the partition wall (20) is connected to the main tube (18) in a force-locking manner, in particular is pressed onto the latter with an eccentrically arranged through-opening.

8. The sound reducer (10) according to claim 7,
**characterised in that**
the main tube (18) has a radial projection (22) which additionally axially fixes the partition wall (20) on it in a form-locking manner on at least one side.

9. The sound reducer (10) according to one of the preceding claims, **characterised in that**
the casing tapers conically towards its axial ends.

10. The sound reducer (10) according to one of the preceding claims,
**characterised in that**
the housing (12) is composed of two half-shells (12a, 12b) which are tightly connected, in particular welded, to one another along their shell edges (121a, 121b).

11. The sound reducer (10) according to claim 10,
**characterised in that**
the half-shells (12a, 12b) are products of a deep-drawing process.

12. A method of manufacturing a noise reducer (10) according to any one of claims 10 to 11, comprising the steps of:
- Providing the two half shells (12a, 12b),
- Providing the main pipe (18) with the partition wall (20) which it passes through and which is sealingly connected to the outside of its pipe wall and which is aligned perpendicular to the pipe axis,
- Clamping inserting the ends (181) of the main pipe (18) into the pipe socket (16) of each one of the half-shells (12a, 12b) so that their shell edges (121a, 121b) come to rest against one another and the outer edge of the partition wall (20) rests against the inner wall of one of the half-shells (12b),
- sealingly connecting of the shell edges (121a, 121b) to each other.

13. The method according to claim 12, insofar as it relates back to claim 9, **characterised in that**
the end of the main pipe which is closer to the partition wall is inserted into the pipe socket of the half-shell assigned to it to such an extent that the outer edge of the partition wall rests against the inner wall of the conical region of this half-shell.

14. The method according to claim 13,
**characterised in that**
the inner wall of the half-shell has an undercut-free stop in the contact region of the partition wall on the inner wall of the half-shell.

15. The method according to one of claims 12 to 14,
**characterised in that**
the partition wall (20) is first pressed onto the main tube (18), which is then provided with at least one radial projection (22) axially abutting the partition wall (20).

## Revendications

1. Réducteur de bruit (10), comprenant
- un boîtier (12) avec une enveloppe (122) s'étendant longitudinalement le long d'un axe de boîtier et symétrique en rotation par rapport à de l'axe de boîtier et deux parois frontales (123) orientées transversalement à l'axe de boîtier, qui présentent une courbure de base convexe, symétrique en rotation par rapport à l'axe de boîtier, et
- un tube principal (18) traversant le boîtier (12), décalé parallèlement à l'axe du boîtier, avec des fenêtres (182) réalisées sous forme d'ouvertures dans la paroi du tube,
le tube principal (20) étant fixé de manière étanche dans des passages traversant les parois frontales (123),
les parois frontales (123) se transforment, dans la zone des passages, en tubulures (16) orientées vers l'extérieur, qui font saillie d'une seule pièce et d'un même matériau à partir de la paroi frontale (123) respective,
et la zone de transition (14) annulaire respective entre la paroi frontale (123) et la tubulure (16) est courbée de manière concave en s'écartant de la courbure de base convexe,
**caractérisé en ce**
**que** les tubulures sont orientées exclusivement vers l'extérieur et en ce que le rayon de la courbure concave est au moins égal à 1/15 du rayon de la courbure convexe de la courbure de base.

2. Réducteur de bruit (10) selon la revendication 1,
**caractérisé en ce**
**que** les passages se trouvent chacun entre le centre et le bord de la paroi frontale (123) associée et chacun à une faible distance du bord de la paroi frontale.

3. Réducteur de bruit (10) selon l'une des revendications précédentes, **caractérisé en ce**
**que** le tube principal (18) est fixé par serrage dans la tubulure (16), en particulier soudé à la tubulure (16).

4. Réducteur de bruit (10) selon l'une des revendications précédentes, **caractérisé en ce**
**que** les tubulures (16) font saillie axialement vers l'extérieur au-delà des extrémités (181) du tube principal (18) qui pénètrent dans celles-ci.

5. Réducteur de bruit (10) selon l'une des revendications précédentes, **caractérisé en ce**
**qu'**au moins une paroi de partition (20) traversée par le tube principal (18), orientée perpendiculairement à l'axe du boîtier et divisant l'intérieur du boîtier en sections axiales de tailles différentes, est disposée dans le boîtier (12).

6. Réducteur de bruit (10) selon la revendication 5,
**caractérisé en ce**
**que** la paroi de partition est reliée de manière étanche à l'extérieur du tube principal (18) et/ou à l'intérieur de l'enveloppe (122).

7. Réducteur de bruit (10) selon la revendication 6,
**caractérisé en ce**
**que** la paroi de partition (20) est reliée par force au tube principal (18), en particulier est pressée sur celui-ci avec une ouverture de passage disposée de manière excentrique.

8. Réducteur de bruit (10) selon la revendication 7,
**caractérisé en ce**
**que** le tube principal (18) présente au moins d'un côté, en appui axial sur la paroi de partition (20), une saillie radiale (22) fixant en outre celle-ci axialement sur lui par complémentarité de forme.

9. Réducteur de bruit (10) selon l'une des revendications précédentes, **caractérisé en ce**
**que** l'enveloppe se rétrécit de manière conique vers ses extrémités axiales.

10. Réducteur de bruit (10) selon l'une des revendications précédentes, **caractérisé en ce**
**que** le boîtier (12) est composé de deux demi-coques (12a, 12b) qui sont reliées entre elles de manière étanche, en particulier soudées, le long de leurs bords de coque (121a, 121b).

11. Réducteur de bruit (10) selon la revendication 10,
**caractérisé en ce**
**que** les demi-coques (12a, 12b) sont des produits d'un processus d'emboutissage profond.

12. Procédé de fabrication d'un réducteur de bruit (10) selon l'une quelconque des revendications 10 à 11, comprenant les étapes consistant à :
- mettre à disposition des deux demi-coques (12a, 12b),
- mettre à disposition du tube principal (18) avec la paroi de partition (20) traversée par celui-ci, reliée de manière étanche à la face extérieure de sa paroi tubulaire et orientée perpendiculairement à l'axe du tube,
- introduire par force des extrémités (181) du tube principal (18) dans la tubulure (16) de chacune des demi-coques (12a, 12b), de sorte que leurs bords de coque (121a, 121b) viennent en appui l'un contre l'autre et que le bord extérieur de la paroi de partition (20) s'applique contre la paroi intérieure de l'une des demi-coques (12b),
- lier d'une manière étanche des bords de la coque (121a, 121b) entre eux.

13. Procédé selon la revendication 12, dans la mesure où il se rapporte à la revendication 9,
**caractérisé en ce**
**que** l'extrémité du tube principal qui est la plus proche de la paroi de partition est introduite dans la tubulure de la demi-coque qui lui est associée jusqu'à ce que le bord extérieur de la paroi de partition soit en contact avec la paroi intérieure de la partie conique de cette demi-coque.

14. Procédé selon la revendication 13,
**caractérisé en ce**
**que** la paroi intérieure de la demi-coque présente une butée sans contre-dépouille dans la zone d'appui de la paroi de partition contre la paroi intérieure de la demi-coque.

15. Procédé selon l'une des revendications 12 à 14,
**caractérisé en ce**
**que** la paroi de partition (20) est d'abord pressée sur le tube principal (18), qui est ensuite pourvu d'au moins une saillie radiale (22) reposant axialement sur la paroi de partition (20).
